# EUROPEAN PATENT SPECIFICATION

(11) **EP 2 361 538 B1**
(45) Date of publication and mention of the grant of the patent: **07.08.2013**
(21) Application number: 08876958.3
(22) Date of filing: 03.11.2008
(51) Int. Cl.: A47J 27/00, A47J 36/00, A47J 37/10, A47J 45/06

(54) **ELECTRICITY GENERATING BASED ON THE DIFFERENCE IN TEMPERATURE ELECTRONIC PAN WITH A SEMICONDUCTOR REFRIGERATION SLICE**
ELEKTRONISCHE PFANNE MIT ENERGIEERZEUGUNG AUF TEMPERATURDIFFERENZGRUNDLAGE MIT EINER HALBLEITERKÜHLSCHICHT
POÊLE ÉLECTRONIQUE GÉNÉRANT DE L'ÉLECTRICITÉ SUR LA BASE D'UNE DIFFÉRENCE DE TEMPÉRATURE AVEC UNE TRANCHE DE RÉFRIGÉRATION À SEMI-CONDUCTEURS

(30) Priority: 16.09.2008 CN 200810215579
(43) Date of publication of application: 31.08.2011
(73) Proprietor: Mingle Metal (Shen Zhen) Co., Ltd, Shenzhen, Guangdong 518112 (CN)
(72) Inventor: HE, Weiming, Shenzhen, Guangdong 518112 (CN); LI, Ming, Shenzhen, Guangdong 518112 (CN)
(74) Representative: Börlin, Maria
(86) International application number: PCT/CN2008/072910
(87) International publication number: WO 2010/031225

(56) References cited:
- WO-A1-98/10686
- CN-A- 101 032 367
- CN-Y- 2 817 672
- CN-Y- 2 829 561
- CN-Y- 2 829 598
- CN-Y- 201 015 533
- CN-Y- 201 015 533
- DE-A1- 19 717 260
- US-A1- 2006 086 258
- US-A1- 2007 012 199

## Description

The present application claims the benefit of priority to Chinese patent application No. 200810215579.8 titled "ELECTRICITY GENERATING BASED ON THE DIFFERENCE IN TEMPERATURE ELECTRONIC PAN WITH A SEMICONDUCTOR REFRIGERATION SLICE", filed with the Chinese State Intellectual Property Office on September 16, 2008. The entire disclosures thereof are incorporated herein by reference.

### FIELD OF THE INVENTION

The present invention relates to a daily cooker, in particular to a thermoelectric-generating electronic-temperature-measuring pan with a semiconductor refrigeration slice.

### BACKGROUND OF THE INVENTION

At present, obtaining data (e.g., temperature of the bottom of a pan) of a heating vessel in cooking food is not only helpful to cook delicious foods, but also avoids the problems that the health standard for killing germina cannot be met because of insufficient temperature of a pan body, or nutrition in food is damaged, even becomes harmful substances because of excessive high temperature of a pan body in cooking. Therefore, some improvements have been presented in some patents, such as "a pot with temperature display" disclosed in Chinese patent CN200520113972.8, and "an electronic temperature indicating shovel" disclosed in CN200520128116.X. In these patents, the rapid and precise characteristics of electronic temperature measurement are applied to food processing, which provides a convenient and practical method ensuring the food hygiene, safety and health. However, these temperature measuring electronic devices must use the battery (disposable battery or rechargeable battery) to supply power, which is not safety, reliable and convenient when the battery is damaged, and is not economic and environmental protective since the battery has to be replaced and discarded. These problems will negatively affect the application of temperature measuring electronic cooking products, and thus these products are needed to be improved.

CN 2010 15533 Y discloses a pan with a thermo electric-generating element disposed in the handle. US 2006/0086258 A1 discloses an electronic cooking pan with thermal sensor.

### SUMMARY OF THE INVENTION

In view of the disadvantages in the prior art, the object of the present invention is to provide a thermoelectric-generating electronic-temperature-measuring pan with a semiconductor refrigeration slice which is environmental protective, economic, reliable and convenient. The product is not powered by the battery, and can directly measure cooking temperature in real time.

The present invention according to claim 1 provides the following technical solutions.

A thermoelectric-generating electronic-temperature-measuring pan with a semiconductor refrigeration slice includes a pan body, a handle disposed on the pan body, a thermoelectric generating system and a temperature measuring system. The thermoelectric generating system is formed by connecting the semiconductor refrigeration slice, a boost regulating electronic component and an electric energy storage device in sequence.

One surface of the semiconductor refrigeration slice is in contact with the pan body, and the other surface is connected to a heat removing device.

The temperature measuring system is configured to measure temperature of a bottom of the pan body

The thermoelectric generating system is connected to the temperature measuring system, so as to supply electric energy to the temperature measuring system.

Optionally, the temperature measuring system is formed by sequentially connecting a temperature sensor, a microprocessor containing a temperature measuring program and a display device for displaying temperature measured by the temperature sensor. The temperature sensor is provided at the bottom of the pan body.

Optionally, the handle has a cavity in which the boost regulating electronic component, the electric energy storage device, the microprocessor and the display device are disposed. A chamber is provided at a connection portion of the handle connected with the pan body. The semiconductor refrigeration slice is disposed in the chamber.

Optionally, the display device is a liquid crystal display screen, and is further configured to display use information or operation guidance related to temperature.

Optionally, the thermoelectric generating system and the temperature measuring system are disposed on a circuit board. The temperature sensor is disposed in a metal protective sleeve having a closed end. Heat transferring adhesive is provided between the protective sleeve and the temperature sensor. The temperature sensor is connected to the circuit board through a conducting wire provided in the protective sleeve.

Optionally, a hole is formed in the bottom of the pan body in parallel with a bottom surface of the pan body from an edge of the bottom of the pan body towards its center, a part of the protective sleeve and the temperature sensor are disposed in the hole. The protective sleeve is connected to the handle along a side surface of the pan body.

According to the invention, the chamber in which the semiconductor refrigeration slice is placed is disposed in a front end connection portion of the handle connected with the pan body. A small flat surface matched with the size of the semiconductor refrigeration slice is machined on the side surface of the pan body at the connection portion. One surface of the semiconductor refrigeration slice abuts against the side surface of the pan body at the connection portion, and heat transferring adhesive is provided between the pan body and the semiconductor refrigeration slice. The other surface of the semiconductor refrigeration slice abuts against the heat removing device, and heat transferring adhesive is provided between the heat removing device and the semiconductor refrigeration slice.

Optionally, the heat removing device is a heat removing metal sheet, the heat removing metal sheet is located on the pan body or on the handle, or is a part of the handle.

Optionally, the cavity is open and is located at a rear half portion of the handle. The boost regulating electronic component, the electric energy storage device, the circuit board and the liquid crystal display screen are disposed in an electronic box located in the cavity The electronic box is removable from the cavity under action of external force. A contact device is provided at a front end of the electronic box so as to allow the temperature sensor and the semiconductor refrigeration slice to be connected to the circuit board.

Optionally, a front half portion of the handle is designed into a hollow structure. The conducting wires for the temperature sensor and the semiconductor refrigeration slice pass through the hollow structure, and then are connected to the circuit board in the electronic box via the contact device.

Optionally, the electronic box is provided with a transparent window and an operation button.

Optionally, the temperature measuring system contains a program for measuring stored electric quantity of the generating system and displaying the stored electric quantity on the liquid crystal display screen.

Based on the principle that different conducting materials have different electron surface work function and thus a potential difference at contacting surfaces of two different materials may be established, the present invention presents a technology capable of generating electricity with redundant heat in cooking by inventively using the Seebeck effect (i.e., thermoelectric effect), so as to generate electric energy required for the electronic temperature measuring circuit. It is possible to measure the temperature of the bottom of the pan by the electronic temperature measuring circuit without the battery. Thus, the pan according to the present invention is a cooker which is healthy, sanitary and safe, and may meet the requirements of environmental protection and economy The pan according to the present invention is convenient for use and reliable, and has great practicality and good commercial perspective.

### BRIEF DESCRIPTION OF THE DRAWINGS

Fig. 1 is a top view of the present invention;

Fig. 2 is a side view of the present invention;

Fig. 3 is a perspective view of the present invention;

Fig. 4 is a sectional view of the present invention;

Fig. 5 is an enlarged view of part A in Fig. 4;

Fig. 6 is an enlarged view of part B in Fig. 4; and

Fig. 7 is a schematic view of function modules for an electronic circuit according to the present invention.

### DETAILED DESCRIPTION OF THE INVENTION

Hereinafter, the present invention will be further described in detail with reference to drawings.

Numeral references in drawings are listed as follows:

| | | | |
|---|---|---|---|
| 1 | pan body | 2 | semiconductor refrigeration slice |
| 3 | heat removing metal sheet | 4 | conducting wire |
| 5 | handle | 6 | electric contact |
| 7 | contact elastic sheet | 8 | conductive bar |
| 9 | membrane keyboard surface | 10 | transparent glass |
| 11 | liquid crystal display screen | 12 | electronic circuit board |
| 13 | electronic box upper housing | 14 | operating button |
| 15 | sponge pad | 17 | electronic box lower housing |
| 18 | boost regulating electronic component | | |
| 19 | electric energy storage device | 20 | contact elastic sheet |
| 21 | electric contact | 22 | conducting wire |
| 23 | retaining screw | 24 | bracket |
| 25 | metal protective sleeve | 26 | heat transferring adhesive |
| 27 | heat transferring adhesive | 28 | handle metal protective housing |
| 29 | temperature sensor | | |

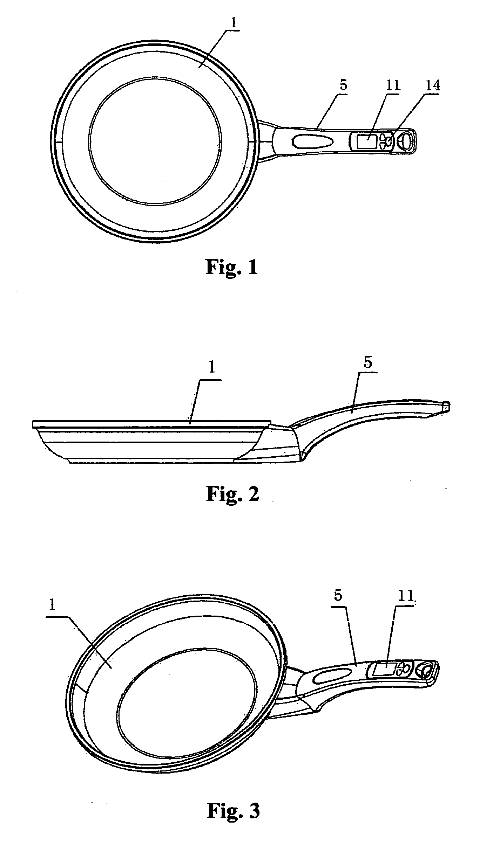

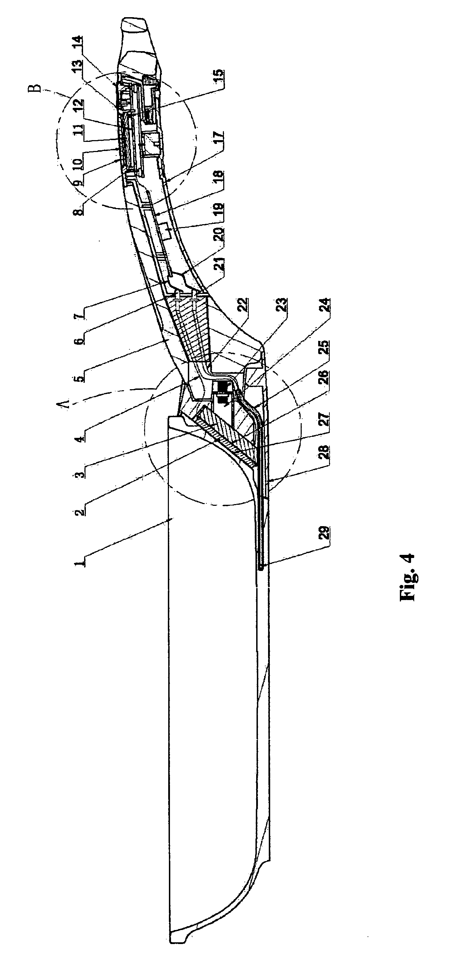

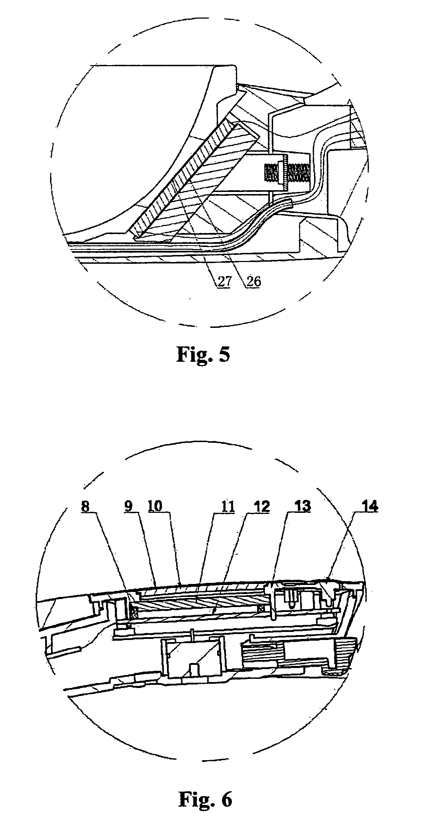

As shown in Figs. 1-6, a thermoelectric-generating electronic-temperature-measuring pan with a semiconductor refrigeration slice includes a pan body 1, a handle 5 disposed on the pan body 1, a heat removing device, thermoelectric generating system and a temperature measuring system. The thermoelectric generating system is formed by connecting a semiconductor refrigeration slice 2, a boost regulating electronic component 18 and an electric energy storage device 19 in sequence. One surface of the semiconductor refrigeration slice 2 is in contact with the pan body 1, and the other surface is in contact with the heat removing device. The thermoelectric generating system is connected to the temperature measuring system, so as to supply electric energy to the temperature measuring system.

Preferably, the temperature measuring system is formed by connecting a temperature sensor 29, a microprocessor 30 containing a temperature measuring program and a display device displaying the temperature in sequence. The temperature sensor 29 is provided at the bottom of the pan body 1.

Preferably, the heat removing device is a heat removing metal sheet 3. The heat removing metal sheet 3 may be located on the pan body 1 or on the handle 5, or may be a part of the handle 5. In this embodiment, the heat removing metal sheet 3 is a part of the handle 5.

As specifically shown in Figs. 1-6, the bottom of the pan body 1 has a certain thickness, and a small hole is formed in the bottom of the pan body 1 in parallel with the bottom surface of the pan body 1 from the edge of the bottom of the pan body 1 towards the center of the bottom of the pan body 1 to receive the temperature sensor component, so that the temperature of the bottom of the pan may be directly sensed and need no compensation, which may not only substantially increase the temperature measuring response speed, simplify the design of software and reduce the cost of hardware, but also simplify the operation. The temperature sensor component is consisted of a temperature sensor 29, a conducting wire 22 and a protective sleeve located outside of the temperature sensor 29 and the conducting wire 22. In this embodiment, the protective sleeve is preferably a metal protective sleeve 25 having one closed end. The temperature sensor 29 is positioned at the tip of the metal protective sleeve 25, and a heat transferring adhesive is provided between the metal protective sleeve 25 and the temperature sensor 29. The temperature sensor 29 and a part of the metal protective sleeve 25 are inserted in the hole. The metal protective sleeve 25 is connected to the handle 5 along the side surface of the pan body 1. The temperature sensor 29 is connected to a circuit board in an electronic box via a contact device. The contact device includes an electric contact 21 for the handle 5 and a contact elastic sheet 20 on the electronic box. Specifically, the temperature sensor 29 is externally connected to the electric contact 21 for the handle 5 through the conducting wire 22, and then connected to the electronic circuit board 12 in the electronic box via the contact elastic sheet 20 on the electronic box. The generating system and the temperature measuring system are provided on the electronic circuit board 12.

A chamber is provided in the front portion of the handle 5 connected to the pan body 1, and is enclosed by a handle metal protective housing 28 at its outside. The semiconductor refrigeration slice 2 is placed inside the chamber. A small flat surface is machined at the corresponding position of the side surface of the pan body 1, and is sized to match with the semiconductor refrigeration slice 2. One surface of the semiconductor refrigeration slice 2 closely abuts against the corresponding position of the side surface of the pan body 1 via heat transferring adhesive 27 so as to ensure a good contact between the pan body and the semiconductor refrigeration slice, while the other surface of the semiconductor refrigeration slice 2 is in contact with the heat removing metal sheet 3 via heat transferring adhesive 26. The heat removing metal sheet 3 may be made as a part of the handle metal protective housing 28 so as to increase the heat removing area. The semiconductor refrigeration slice 2 is connected to another electric contact 6 for the handle 5 through the conducting wire 4, and then connected to the electronic circuit board 12 in the electronic box via the contact elastic sheet 7 on the electronic box. The handle 5 and the handle metal protective housing 28 are riveted or welded on a bracket 24 which is fixed on the pan body 1 by retaining screws 23.

The front portion of the handle 5 is hollowed to allow the conducting wire 22 for the temperature sensor 29 and the conducting wire 4 for the semiconductor refrigeration slice 2 to pass through so as to be connected to the electronic circuit board 12 in the electronic box via the contact device.

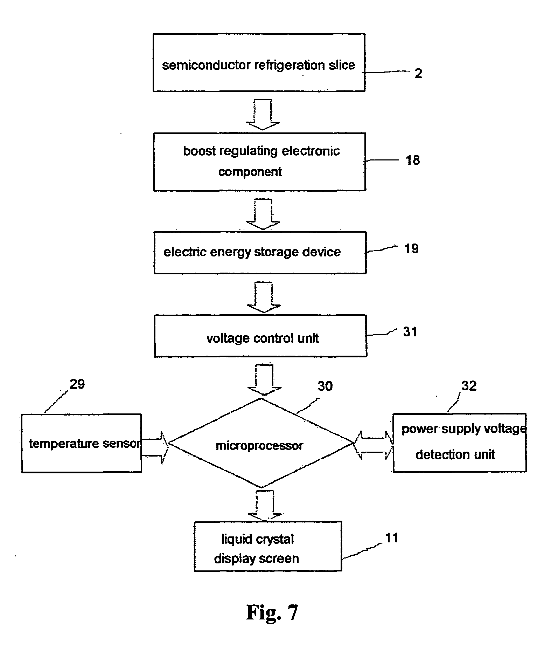

The rear half portion of the handle 5 is designed to have an open cavity capable of receiving the electronic box. The electronic box is a separate component being detachable from the handle 5, and includes an electronic box upper housing 13 and an electronic box lower housing 17. The boost regulating electronic component 18, the electric energy storage device 19, the electronic circuit board 12 and a liquid crystal display screen 11 is installed in the electronic box. These electronic elements or components are connected in accordance with the circuit logic shown in Fig. 7. The liquid crystal display screen 11 is connected to the electronic circuit board 12 via a sponge pad 15 and a conductive bar 8. In addition, the temperature measuring system may contain the program for measuring the stored electric quantity of the generating system and may display the stored electric quantity on the liquid crystal display screen 11.

Preferably, a voltage control unit 31 is connected between the electric energy storage device 19 and the microprocessor 30 to control the voltage applied to the temperature measuring system from the thermoelectric generating system.

Preferably, the thermoelectric-generating electronic-temperature-measuring pan with a semiconductor refrigeration slice further includes a power supply voltage detection unit 32 connected to the microprocessor 30 and used to detect the output voltage of the thermoelectric generating system.

Preferably, the thermoelectric-generating electronic-temperature-measuring pan with a semiconductor refrigeration slice further includes a buzzer.

A visual window is opened at a portion of the electronic box upper housing 13 facing the liquid crystal display screen 11, and a transparent glass 10 is provided in the visual window. An operating button 14 is provided on the electronic circuit board 12, and is hermetically connected with the body of the electronic box. In this embodiment, the operating button 14 is partially protruded from the electronic box upper housing 13, and is covered with a membrane keyboard surface 9. The whole electronic box may be detached from the handle, so as to facilitate cleaning of the pan body The contact elastic sheets 7 and 20 are provided at the front end of the electronic box. When the electronic box is mounted in the handle, the front end of the electronic box is electrically connected to the semiconductor refrigeration slice 2 and the temperature sensor 29 via the contact elastic sheets 7 and 20, respectively.

After the temperature of the pan body 1 is elevated, the thermoelectric generating system may generate electric energy, and supply the electric energy to temperature measuring system, and the temperature measuring system supplies the electric energy to the microprocessor and the display device. The microprocessor is configured to convert the temperature information of the bottom of the pan obtained by the temperature sensor into temperature data and use information or operation guidance related to the temperature through the temperature measuring system, and then display these data or information on the display device. The microprocessor also may measure the stored electric quantity of the generating system, and may display the stored electric quantity on the liquid crystal display screen. The present invention converts the heat energy lost in cooking into electric energy, and stores the electric energy to be supplied to the temperature measuring electronic device. The present invention inventively uses the Seebeck effect (i.e., thermoelectric effect). One end of the semiconductor refrigeration slice which generally generates heat pumping function by consuming electric energy to achieve the refrigeration effect is installed with the heat removing metal sheet, and the other end is fixed in an appropriate position. A temperature difference is generated at both sides of the semiconductor refrigeration slice by using the heat energy lost in cooking so as to generate a potential difference between electrodes thereof to output electric energy. A boost circuit, a regulating circuit and an energy storage circuit are also provided. Thus, the present invention achieves an electronic temperature measuring function without battery, since the electric energy may be generated through heat energy and no battery is needed to drive the temperature measuring system, which is environmental protective, economic, convenient and reliable, and has a reasonable structure so as to reflect the temperature of the surface of the pan rapidly and precisely.

The above circuits are conventional circuits in the prior art, which will not be described repeatedly herein.

The above described is the preferred embodiments of the present invention.

## Claims

1. A thermoelectric-generating electronic-temperature-measuring pan with a semiconductor refrigeration slice (2), comprising a pan body (1), a handle (5) disposed on the pan body (1), a thermoelectric generating system and a temperature measuring system, the thermoelectric generating system being formed by connecting the semiconductor refrigeration slice (2), a boost regulating electronic component (18) and an electric energy storage device (19) in sequence, wherein
one surface of the semiconductor refrigeration slice (2) is in contact with the pan body (1), and the other surface is connected to a heat removing device;
the temperature measuring system is configured to measure temperature of a bottom of the pan body (1); and
the thermoelectric generating system is connected to the temperature measuring system, so as to supply electric energy to the temperature measuring system, **characterized in that** a chamber in which the semiconductor refrigeration slice (2) is placed is disposed in a front end connection portion of the handle (5) connected with the pan body (1), a small flat surface matched with the size of the semiconductor refrigeration slice (2) is machined on the side surface of the pan body (1) at the connection portion, one surface of the semiconductor refrigeration slice (2) abuts against the side surface of the pan body (1) at the connection portion, heat transferring adhesive (27) is provided between the pan body (1) and the semiconductor refrigeration slice (2), the other surface of the semiconductor refrigeration slice (2) abuts against the heat removing device, and heat transferring adhesive (27) is provided between the heat removing device and the semiconductor refrigeration slice (2).

2. The thermoelectric-generating electronic-temperature-measuring pan with a semiconductor refrigeration slice (2) according to claim 1, wherein the temperature measuring system is formed by sequentially connecting a temperature sensor (29) (29), a microprocessor containing a temperature measuring program and a display device for displaying temperature measured by the temperature sensor (29) (29), and wherein the temperature sensor (29) (29) is provided at the bottom of the pan body (1).

3. The thermoelectric-generating electronic-temperature-measuring pan with a semiconductor refrigeration slice (2) according to claim 2, wherein the handle (5) has a cavity in which the boost regulating electronic component (18), the electric energy storage device (19), the microprocessor and the display device are disposed, a chamber is provided at a connection portion of the handle (5) connected with the pan body (1), and the semiconductor refrigeration slice (2) is disposed in the chamber.

4. The thermoelectric-generating electronic-temperature-measuring pan with a semiconductor refrigeration slice (2) according to claim 2, wherein the display device is a liquid crystal display screen, and is further configured to display use information or operation guidance related to temperature.

5. The thermoelectric-generating electronic-temperature-measuring pan with a semiconductor refrigeration slice (2) according to claim 4, wherein the thermoelectric generating system and the temperature measuring system are disposed on a circuit board, the temperature sensor (29) (29) is disposed in a metal protective sleeve (25) having a closed end, heat transferring adhesive (27) is provided between the protective sleeve and the temperature sensor (29) (29), and the temperature sensor (29) (29) is connected to the circuit board through a conducting wire (4) provided in the protective sleeve.

6. The thermoelectric-generating electronic-temperature-measuring pan with a semiconductor refrigeration slice (2) according to claim 5, wherein a hole is formed in the bottom of the pan body (1) in parallel with a bottom surface of the pan body (1) from an edge of the bottom of the pan body (1) towards its center, a part of the protective sleeve and the temperature sensor (29) (29) are disposed in the hole, and the protective sleeve is connected to the handle (5) along a side surface of the pan body (1).

7. The thermoelectric-generating electronic-temperature-measuring pan with a semiconductor refrigeration slice (2) according to claim 6, wherein the heat removing device is a heat removing metal sheet (3), the heat removing metal sheet (3) is located on the pan body (1) or on the handle (5), or is a part of the handle (5).

8. The thermoelectric-generating electronic-temperature-measuring pan with a semiconductor refrigeration slice (2) according to claim 6, wherein the cavity is open and is located at a rear half portion of the handle (5); the boost regulating electronic component (18), the electric energy storage device (19), the circuit board and the liquid crystal display screen are disposed in an electronic box located in the cavity, the electronic box is removable from the cavity under action of external force, a contact device is provided at a front end of the electronic box so as to allow the temperature sensor (29) and the semiconductor refrigeration slice (2) to be connected to the circuit board.

9. The thermoelectric-generating electronic-temperature-measuring pan with a semiconductor refrigeration slice (2) according to claim 8, wherein a front half portion of the handle (5) is designed into a hollow structure, the conducting wires for the temperature sensor (29) and the semiconductor refrigeration slice (2) pass through the hollow structure, and then are connected to the circuit board in the electronic box via the contact device.

10. The thermoelectric-generating electronic-temperature-measuring pan with a semiconductor refrigeration slice (2) according to claim 9, wherein the electronic box is provided with a transparent window and an operation button.

11. The thermoelectric-generating electronic-temperature-measuring pan with a semiconductor refrigeration slice (2) according to claim 4, wherein the temperature measuring system contains a program for measuring stored electric quantity of the generating system and displays the stored electric quantity on the liquid crystal display screen.

## Patentansprüche

1. Thermoelektrisch-energieerzeugende, elektronisch temperaturmessende Pfanne mit einer Halbleiterkühlschicht (2), umfassend einen Pfannenkörper (1), einen Pfannenstiel (5), welcher am Pfannenkörper (1) angebracht ist, ein thermoelektrisches Energieerzeugungssystem und ein Temperaturmesssystem, wobei das thermoelektrische Energieerzeugungssystem durch Verbinden der Halbleiterkühlschicht (2), einer aufwärtsregelnden elektronischen Komponente (18) und einer Stromspeichervorrichtung (19) in Serie ausgebildet ist, wobei
eine Oberfläche der Halbleiterkühlschicht (2) sich in Kontakt mit dem Pfannenkörper (1) befindet und die andere Oberfläche mit einer Hitzeableitvorrichtung verbunden ist;
wobei das Temperaturmesssystem konfiguriert ist, um die Temperatur eines Bodens des Pfannenkörpers (1) zu messen; und
das thermoelektrische Energieerzeugungssystem mit dem Temperaturmesssystem verbunden ist, um elektrische Energie an das Temperaturmesssystem zu liefern, **dadurch gekennzeichnet, dass** eine Kammer, in welcher sich die Halbleiterkühlschicht (2) befindet, in einem vorderen Endverbindungsabschnitt des Pfannenstiels (5) verbunden mit dem Pfannenkörper (1) angeordnet ist, wobei eine kleine Fläche, welche mit der Größe der Halbleiterkühlschicht (2) abgestimmt ist, auf der Seitenfläche des Pfannenkörpers (1) am Verbindungabschnitt maschinbearbeitet ist, wobei eine Fläche der Halbleiterkühlschicht (2) gegen die Seitenfläche des Pfannenkörpers (1) am Verbindungsabschnitt anstößt, wobei ein Wärmeleitungskleber (27) zwischen dem Pfannenkörper (1) und der Halbleiterkühlschicht (2) vorgesehen ist, wobei die andere Fläche der Halbleiterkühlschicht (2) gegen die Wärmeableitungsvorrichtung stößt und wobei der Wärmeleitungskleber (27) zwischen der Wärmeableitungsvorrichtung und der Halbleiterkühlschicht (2) vorgesehen ist.

2. Thermoelektrisch-energieerzeugende, elektronisch temperaturmessende Pfanne mit einer Halbleiterkühlschicht (2) nach Anspruch 1, wobei das Temperaturmesssystem durch aufeinanderfolgendes Verbinden eines Temperatursensors (29) (29), eines Mikroprozessors, welcher ein Temperaturmessprogramm umfasst, und einer Anzeigevorrichtung zum Anzeigen von Temperatur, welche durch den Temperatursensor (29) (29) gemessen wird, ausgebildet ist und wobei der Temperatursensor (29) (29) am Boden des Pfannenkörpers (1) bereitgestellt ist.

3. Thermoelektrisch-energieerzeugende, elektronisch temperaturmessende Pfanne mit einer Halbleiterkühlschicht (2) nach Anspruch 2, wobei der Pfannenstiel (5) eine Ausnehmung aufweist, in welcher die aufwärtsregelnde Elektronikkomponente (18), die Stromspeichervorrichtung (19), der Mikroprozessor und die Anzeigevorrichtung angeordnet sind, wobei eine Kammer an einem Verbindungsabschnitt des Pfannenstiels (5) verbunden mit dem Pfannenkörper (1) vorgesehen ist und die Halbleiterkühlschicht (2) in der Kammer angeordnet ist.

4. Thermoelektrisch-energieerzeugende, elektronisch temperaturmessende Pfanne mit einer Halbleiterkühlschicht (2) nach Anspruch 2, wobei die Anzeigevorrichtung ein Flüssigkristallanzeigeschirm ist und des Weiteren konfiguriert ist, um Benutzungsinformation oder Betriebsanleitung in Bezug auf die Temperatur anzuzeigen.

5. Thermoelektrisch-energieerzeugende, elektronisch temperaturmessende Pfanne mit einer Halbleiterkühlschicht (2) nach Anspruch 4, wobei das thermoelektrische Energieerzeugungssystem und das Temperaturmesssystem auf einer Leiterplatte angeordnet sind, wobei der Temperatursensor (29) (29) in einer Metallschutzhülse (25) angeordnet ist, welche ein geschlossenes Ende aufweist, wobei ein Wärmeleitungskleber (27) zwischen der Schutzhülse und dem Temperatursensor (29) (29) vorgesehen ist und wobei der Temperatursensor (29) (29) mit der Leiterplatte durch einen leitenden Draht (4), welcher in der Schutzhülse bereitgestellt ist, verbunden ist.

6. Thermoelektrisch-energieerzeugende, elektronisch temperaturmessende Pfanne mit einer Halbleiterkühlschicht (2) nach Anspruch 5, wobei ein Loch im Boden des Pfannenkörpers (1) parallel zu einer Oberfläche des Pfannenkörpers (1) von einer Kante des Bodens des Pfannenkörpers (1) in Richtung seiner Mitte ausgebildet ist, wobei ein Teil der Schutzhülse und der Temperatursensor (29) (29) im Loch angeordnet sind und die Schutzhülse mit dem Pfannenstiel (5) entlang einer Seitenfläche des Pfannenkörpers (1) verbunden ist.

7. Thermoelektrisch-energieerzeugende, elektronisch temperaturmessende Pfanne mit einer Halbleiterkühlschicht (2) nach Anspruch 6, wobei die Wärmeableitungsvorrichtung ein Wärmeableitungsmetallblech (3) ist, wobei das Wärmeableitungsmetallblech (3) auf dem Pfannenkörper (1) oder auf dem Pfannenstiel (5) angeordnet ist oder ein Teil des Pfannenstiels (5) ist.

8. Thermoelektrisch-energieerzeugende, elektronisch temperaturmessende Pfanne mit einer Halbleiterkühlschicht (2) nach Anspruch 6, wobei die Ausnehmung offen ist und an einem hinteren Hälfteabschnitt des Pfannenstiels (5) angeordnet ist, wobei die aufwärts regelnde Elektronikkomponente (18), die Stromspeichervorrichtung (19), die Leiterplatte und der Flüssigkeitskristallanzeigeschirm in einer Elektronikbox angeordnet sind, welche in der Ausnehmung angeordnet ist, wobei die Elektronikbox aus der Ausnehmung unter Einwirkung einer äußeren Kraft entfernbar ist, wobei eine Kontaktvorrichtung an einem vorderen Ende der Elektronikbox bereitgestellt ist, um so den Temperatursensor (29) und die Halbleiterkühlschicht (2) mit der Leiterplatte in Verbindung gelangen zu lassen.

9. Thermoelektrisch-energieerzeugende, elektronisch temperaturmessende Pfanne mit einer Halbleiterkühlschicht (2) nach Anspruch 8, wobei ein vorderer Hälfteabschnitt des Pfannenstiels (5) als eine hohle Struktur gestaltet ist, wobei die leitenden Drähte für den Temperatursensor (29) und die Halbleiterkühlschicht (2) durch die hohle Struktur hindurchgehen und dann mit der Leiterplatte in der Elektronikbox mittels der Kontaktvorrichtung verbunden sind.

10. Thermoelektrisch-energieerzeugende, elektronisch temperaturmessende Pfanne mit einer Halbleiterkühlschicht (2) nach Anspruch 9, wobei die Elektronikbox mit einem durchsichtigen Fenster und einem Betriebsknopf ausgestattet ist.

11. Thermoelektrisch-energieerzeugende, elektronisch temperaturmessende Pfanne mit einer Halbleiterkühlschicht (2) nach Anspruch 4, wobei das Temperaturmesssystem ein Programm zum Messen der gespeicherten elektrischen Menge des Energieerzeugungssystems umfasst und die gespeicherte elektrische Menge auf dem Flüssigkristallanzeigeschirm anzeigt.

## Revendications

1. Poêle à génération thermoélectrique, à mesure électronique de la température et dotée d'une tranche de réfrigération à semi-conducteurs (2), comprenant un corps de poêle (1), une poignée (5) disposée sur le corps de poêle (1), un système de génération thermoélectrique et un système de mesure de la température, le système de génération thermoélectrique étant formé par connexion successive de la tranche de réfrigération à semi-conducteurs (2), d'un composant électronique de régulation d'élévation (18) et d'un dispositif de stockage d'énergie électrique (19), dans laquelle
une surface de la tranche de réfrigération à semi-conducteurs (2) est en contact avec le corps de poêle (1) et l'autre surface est connectée à un dispositif d'évacuation de chaleur ;
le système de mesure de la température est conçu pour mesurer la température du fond du corps de poêle (1) ; et
le système de génération thermoélectrique est connecté au système de mesure de la température, de manière à fournir de l'énergie électrique au système de mesure de la température, **caractérisée en ce qu'**une chambre dans laquelle est placée la tranche de réfrigération à semi-conducteurs (2) est disposée dans une partie connexion d'extrémité avant de la poignée (5) connectée avec le corps de poêle (1), une petite surface plane dont la taille correspond à celle de la tranche de réfrigération à semi-conducteurs (2) est usinée sur la surface latérale du corps de poêle (1) dans la partie connexion, une surface de la tranche de réfrigération à semi-conducteurs (2) vient en butée contre la surface latérale du corps de poêle (1) dans la partie connexion, un adhésif à transfert thermique (27) est prévu entre le corps de poêle (1) et la tranche de réfrigération à semi-conducteurs (2), l'autre surface de la tranche de réfrigération à semi-conducteurs (2) vient en butée contre le dispositif d'évacuation de chaleur, et l'adhésif à transfert thermique (27) est prévu entre le dispositif d'évacuation de chaleur et la tranche de réfrigération à semi-conducteurs (2).

2. Poêle à génération thermoélectrique, à mesure électronique de la température et dotée d'une tranche de réfrigération à semi-conducteurs (2) selon la revendication 1, dans laquelle le système de mesure de la température est formé par connexion successive d'un capteur de température (29), d'un microprocesseur contenant un programme de mesure de la température et d'un dispositif d'affichage destiné à afficher la température mesurée par le capteur de température (29), et dans laquelle le capteur de température (29) est prévu dans le fond du corps de poêle (1).

3. Poêle à génération thermoélectrique, à mesure électronique de la température et dotée d'une tranche de réfrigération à semi-conducteurs (2) selon la revendication 2, dans laquelle la poignée (5) possède une cavité dans laquelle sont disposés le composant électronique de régulation d'élévation (18), le dispositif de stockage d'énergie électrique (19), le microprocesseur et le dispositif d'affichage, une chambre est prévue dans une partie connexion de la poignée (5) connectée avec le corps de poêle (1), et la tranche de réfrigération à semi-conducteurs (2) est disposée dans la chambre.

4. Poêle à génération thermoélectrique, à mesure électronique de la température et dotée d'une tranche de réfrigération à semi-conducteurs (2) selon la revendication 2, dans laquelle le dispositif d'affichage est un écran d'affichage à cristaux liquides et est conçu en outre pour afficher des informations d'utilisation ou des indications de commande relatives à la température.

5. Poêle à génération thermoélectrique, à mesure électronique de la température et dotée d'une tranche de réfrigération à semi-conducteurs (2) selon la revendication 4, dans laquelle le système de génération thermoélectrique et le système de mesure de la température sont disposés sur une carte de circuits imprimés, le capteur de température (29) est disposé dans un manchon métallique de protection doté d'une extrémité fermée, un adhésif à transfert thermique (27) est prévu entre le manchon de protection et le capteur de température (29), et le capteur de température (29) est connecté à la carte de circuits imprimés par un fil conducteur (4) prévu dans le manchon de protection.

6. Poêle à génération thermoélectrique, à mesure électronique de la température et dotée d'une tranche de réfrigération à semi-conducteurs (2) selon la revendication 5, dans laquelle un trou est formé dans le fond du corps de poêle (1) parallèlement à la surface inférieure du corps de poêle (1) en partant d'un bord du fond du corps de poêle (1) et en allant vers son centre, une partie du manchon de protection et le capteur de température (29) sont disposés dans le trou, et le manchon de protection est connecté à la poignée (5) le long d'une surface latérale du corps de poêle (1).

7. Poêle à génération thermoélectrique, à mesure électronique de la température et dotée d'une tranche de réfrigération à semi-conducteurs (2) selon la revendication 6, dans laquelle le dispositif d'évacuation de chaleur est une feuille métallique d'évacuation de chaleur (3), la feuille métallique d'évacuation de chaleur (3) se trouve sur le corps de poêle (1) ou sur la poignée (5), ou fait partie de la poignée (5).

8. Poêle à génération thermoélectrique, à mesure électronique de la température et dotée d'une tranche de réfrigération à semi-conducteurs (2) selon la revendication 6, dans laquelle la cavité est ouverte et se trouve dans la moitié arrière de la poignée (5) ; le composant électronique de régulation d'élévation (18), le dispositif de stockage d'énergie électrique (19), la carte de circuits imprimés et l'écran d'affichage à cristaux liquides sont disposés dans un boîtier électronique situé dans la cavité, le boîtier électronique peut être extrait de la cavité sous l'action d'une force externe, un dispositif à contact est prévu à l'extrémité avant du boîtier électronique de manière à permettre au capteur de température (29) et à la tranche de réfrigération à semi-conducteurs (2) d'être connectés à la carte de circuits imprimés.

9. Poêle à génération thermoélectrique, à mesure électronique de la température et dotée d'une tranche de réfrigération à semi-conducteurs (2) selon la revendication 8, dans laquelle la moitié avant de la poignée (5) se présente sous la forme d'une structure creuse, les fils conducteurs du capteur de température (29) et de la tranche de réfrigération à semi-conducteurs (2) passent à travers ladite structure creuse, et sont ensuite connectés à la carte de circuits imprimés du boîtier électronique par l'intermédiaire du dispositif à contact.

10. Poêle à génération thermoélectrique, à mesure électronique de la température et dotée d'une tranche de réfrigération à semi-conducteurs (2) selon la revendication 9, dans laquelle le boîtier électronique est pourvu d'un hublot transparent et d'un bouton de commande.

11. Poêle à génération thermoélectrique, à mesure électronique de la température et dotée d'une tranche de réfrigération à semi-conducteurs (2) selon la revendication 4, dans laquelle le système de mesure de la température contient un programme destiné à mesurer la quantité d'électricité stockée par le système de génération et affiche ladite quantité d'électricité stockée sur l'écran d'affichage à cristaux liquides.
